# EUROPÄISCHE PATENTSCHRIFT

(11) **EP 1 859 195 B1**
(45) Veröffentlichungstag und Bekanntmachung des Hinweises auf die Patenterteilung: **02.12.2009**
(21) Anmeldenummer: 06705958.4
(22) Anmeldetag: 11.02.2006
(51) Int. Cl.: F16L 59/00, C04B 35/01, C04B 35/44, C04B 35/26

(54) **WÄRMEDÄMMSTOFF SOWIE HERSTELLUNGSVERFAHREN UND VERWENDUNG**
HEAT-INSULATING MATERIAL, PRODUCTION METHOD AND USE THEREOF
MATERIAU ISOLANT THERMIQUE ET PROCEDE DE FABRICATION ET UTILISATION DUDIT MATERIAU

(30) Priorität: 11.03.2005 DE 102005011225
(43) Veröffentlichungstag der Anmeldung: 28.11.2007
(73) Patentinhaber: Forschungszentrum Jülich GmbH, 52425 Jülich (DE)
(72) Erfinder: PRACHT, Gerhard, 52428 Jülich (DE); VASSEN, Robert, 52134 Herzogenrath (DE); STÖVER, Detlev, 52382 Nierderzier (DE)
(74) Vertreter: Hoppe, Karin
(86) Internationale Anmeldenummer: PCT/DE2006/000240
(87) Internationale Veröffentlichungsnummer: WO 2006/097061

(56) Entgegenhaltungen:
- US-A- 5 637 543
- US-A1- 2004 102 309

## Beschreibung

Die Erfindung betrifft einen Wärmedämmstoff, insbesondere einen Wärmedämmstoff für den Einsatz bei Temperaturen oberhalb von 1150°C, wie für Gasturbinen beispielsweise für Kraftwerke oder Flugzeugtriebwerke. Ferner betrifft die Erfindung ein Verfahren zur Herstellung des Wärmedämmstoffs.

### Stand der Technik

Als klassisches Wärmedämmschichtmaterial für den Einsatz bei hohen Temperaturen über 1000°C hat sich bislang tetragonales oder stabilisiertes ZrO₂ bewährt. Dieses liegt als oxidische Deckschicht auf dem metallischen Substrat vor, welches insbesondere aus einem hochlegierten Ni-Basis-Werkstoff besteht. Die Wärmedämmschicht ist entweder direkt oder über eine zusätzliche Zwischenschicht auf dem Substrat angeordnet, die als Haftvermittlerschicht dient. Zur Aufbringung der keramischen Deckschicht sind das atmosphärische Plasmaspritzen (APS) oder auch das Aufdampfen mittels Elektronenstrahl (EB-PVD) geeignet.

Die bislang verwendeten Deck- und Haftvermittlerschichten weisen jedoch bezüglich ihrer thermischen Wechselbeanspruchbarkeit, ihrer Oxidationsbeständigkeit und ihrer Langzeitstabilität noch einige Probleme auf.

Für Deckschichten auf ZrO₂-Basis ist bekannt, dass sie oberhalb von 1000°C nicht ausreichend beständig sind und ihre Wärmeleitfähigkeit zunimmt. Gleichzeitig tritt eine Verdichtung der porösen Struktur auf. Beide Effekte führen bei häufigen Temperaturwechseln in der Regel nachteilig zu einem Abplatzen der Deckschicht.

Das als standardmäßige Wärmedämmmaterial bislang eingesetzte mit Y₂O₃ teilstabilisierte Zirkoniumoxid (YSZ) erleidet bei Temperaturen oberhalb von 1200°C eine Phasenumwandlung, die beim Abkühlen nachteilig zum Abplatzen der Wärmedämmschicht führen kann. YSZ weist in der Regel einen geringeren Wärmeausdehnungskoeffizienten auf als die unter der Wärmedämmschicht liegende Metallschicht, beispielsweise eine Nickelsuperlegierung. Dies hat bei thermischen Belastungen Rissbildungen zur Folge. Beim Langzeiteinsatz zeigt YSZ ein erhebliches Sinterverhalten und das E-Modul der gesinterten Schicht steigt deutlich an. Dadurch verliert die Wärmedämmschicht seine Spannungstoleranz, so dass es letztlich zum Abplatzen der gesamten Schicht kommen kann.

Ferner weist YSZ eine gute Ionenleitfähigkeit für Sauerstoff bei Temperaturen oberhalb von 800°C auf. Dies begünstigt die nachteilige Oxidation einer zwischen der Wärmedämmschicht und der Metallschicht angeordneten Haftvermittlerschicht. Als Folge verändert sich der thermische Ausdehnungskoeffizient dieser Haftvermittlerschicht derart nachteilig, dass ein Abplatzen der Wärmedämmschicht ebenfalls begünstigt wird.

Es ist bekannt, dass Lanthanhexaaluminate als neue Wärmedämmmaterialien eine Langzeitstabilität bis zu 1400°C aufweisen. Lanthanhexaaluminate altern bei diesen hohen Temperaturen signifikant langsamer als kommerzielle Wärmedämmschichten auf Basis von Zirkonium. Die typische Zusammensetzung bevorzugt die Ausbildung von Plättchen, die vorteilhaft eine Verdichtung der Schicht während des Sinterns verhindern. Ein besonders geeigneter Vertreter dieser Klasse weist La₂O₃, Al₂O₃ und MgO auf. Die Kristallstruktur entspricht dabei einer Magnetoplumbit Phase.

Aus DE 198 07 163 C1 ist beispielsweise ein Wärmedämmmaterial bekannt, welches thermochemisch stabil und phasenstabil für den Einsatz bei hohen Temperaturen vorteilhaft geeignet ist. Das Material weist die Summenformel M₂O₃-xMeO-yAl₂O₃ auf, mit M = La oder Nd, Me = Erdalkalimetalle, Übergangsmetalle oder Seltenerden, insbesondere Mg, Zn, Co, Mn, Fe, Ni, Cr. Die Koeffizienten x und y weisen den bevorzugten Bereich von 0,2 ≤ x ≤ 3,3 und 10,0 ≤ y ≤ 13 auf. Als Idealzusammensetzung wird LaMgAl₁₁O₁₉ offenbart, welches in Magnetoplumbit-Struktur kristallisiert und ca. 7,1 Mol-% La₂O₃, ca. 14,3 Mol-% MgO und ca. 78,6 Mol-% Al₂O₃ aufweist.

### Aufgabe und Lösung

Die Aufgabe der Erfindung ist es, ein weiteres Wärmedämmmaterial für den Einsatz bei hohen Temperaturen, insbesondere bei Temperaturen oberhalb von 1150 °C zur Verfügung zu stellen, welches die vorgenannten Nachteile des Standes der Technik überwindet und insbesondere aufgrund seiner Spannungstoleranzen ein sehr gutes Langzeitverhalten aufweist.

Die Aufgabe der Erfindung wird gelöst durch ein Wärmedämmmaterial mit der Gesamtheit an Merkmalen gemäß Anspruch 1 sowie durch ein Herstellungsverfahren gemäß Anspruch 12. Weiterhin wird die Aufgabe der Erfindung gelöst durch die Verwendung gemäß weiterem Nebenanspruch. Vorteilhafte Ausgestaltungen des Materials, der Herstellung und der Verwendung finden sich in den jeweils davon abhängigen Ansprüchen.

### Gegenstand der Erfindung

Ausgehend von den guten Eigenschaften des in DE 198 07 163 C1 offenbarten Wärmedämmmaterials wurde im Rahmen der Erfindung überraschend gefunden, dass die Dotierung einer in dieser Magnetoplumbit auskristallisierenden Phase mit Lithium anstelle der in DE 198 07 163 C1 genannten Erdalkalimetalle, Übergangsmetalle, Seltenerden oder Mischungen hiervon zu weiteren überraschend positiven Eigenschaften führt. Bei dem erfindungsgemäßen Wärmedämmmaterial handelt es sich um eine Zusammensetzung gemäß der Formel M1₂O₃-xLi₂O-yM2₂O₃. Dabei bedeutet M1 = Lanthan, Neodym oder Gadolinium oder Mischungen daraus und M2 = Aluminium, Gallium oder Eisen und Mischungen daraus. Das Material besteht dabei überwiegend aus M2-oxiden, welche in regelmäßigen Abständen Monolagen aus M1₂O₃ und Lithiumoxid aufweist. Anstelle von Aluminiumoxid kann insbesondere auch Galium- oder Eisenoxid als M2₂O₃ verwendet werden. Lanthanoxid kann ebenfalls durch Seltenerdenoxide, insbesondere durch Neodym oder Gadolinium substituiert werden.

Der Einbau von M1₂O₃ führt regelmäßig zur Ausbildung einer Schichtstruktur mit einer charakteristischen plättchenförmigen Struktur der Kristalle. Bevorzugt bildet sich eine Magnetoplumbit-Phase aus, die sich regelmäßig nur in einem sehr engen Zusammensetzungsbereich des Materials ergibt. Die typische Zusammensetzung der Magnetoplumbit-Struktur M1M2₁₁O₁₈ besitzt strukturell bedingt sehr viel kationische (ca. 8 % M1-Elemente) und anionische (ca. 5 % Sauerstoff) Leerstellen im Kristallgitter, die eine Diffusion von Atomen durch die Gitterstruktur erlauben. Typische Vertreter dieser vorteilhaften Phase sind beispielsweise LaA1₁₁O₁₈, LaGa₁₁O₁₈, LaFe₁₁O₁₈, NdAl₁₁O₁₈, NdGa₁₁O₁₈, NdFe₁₁O₁₈, oder auch GdAl₁₁O₁₈, GdGa₁₁O₁₈, GdFe₁₁O₁₁.

Wie aus DE 1698 07 163 C1 bekannt ist, erweitert sich der Homogenitätsbereich der Phase durch Zudotierung von zweiwertigen Kationen mit kleinem Ionenradius, wie beispielsweise Mg²⁺, Mn²⁺, Co²⁺, Zn²⁺ etc., von LaAl₁₁O₁₈ bis hin zu LaMgAl₁₁O₁₉ In dieser optimalen Zusammensetzung besitzt die Verbindung nahezu keine Schwankungsbreite in ihrer Zusammensetzung mehr. Eine weitere Zugabe von La₂O₃ und z. B. MgO führt regelmäßig zu erneuten Defekten in der Struktur und es bilden sich Mehrphasengebiete.

Bei dem in DE 198 07 163 C1 offenbarten Material handelt es sich im optimalen Fall um LaMgAl₁₁O₁₉, welches keinerlei kristallographische Defekte in der Gitterstruktur besitzt. Alle vorhandenen Leerstellen sind durch die Zugabe von MgO, d. h. Mg²⁺ und O²⁻ Ionen besetzt. Gerade diese vollständige Besetzung führt zu der benötigten hohen thermochemischen und Phasenbeständigkeit im Temperaturbereich oberhalb von 1000°C.

Demgegenüber handelt es sich bei dem erfindungsgemäßen Wärmedämmmaterial um eine Verbindung mit der Zusammensetzung gemäß der Formel M1₂O₃-xLi₂O-yM2₂O₃, welches in mehreren Phasen vorliegen kann, von denen eine aber zwingend in der Magnetoplumbit-Struktur vorliegt, die mit Li dotiert ist. Das bedeutet, dass anstelle der Dotierung mit einem zweiwertigen Ion wie beispielsweise Mg²⁺, Mn²⁺, Co²⁺, Zn²⁺ etc. nunmehr eine Dotierung mit einem einwertigen Ion erfolgt.

Bislang ist nur bekannt, dass Verbindungen, die in Magnetoplumbit-Struktur kristallisieren, nur mit zweiwertigen oder mit einer Mischung aus ein- und dreiwertigen Ionen aufgefüllt werden können.

Es wurde nun überraschend herausgefunden, dass die Dotierung mit Li beim Sinterprozess vorteilhaft zur Ausbildung von Segmentierungsrissen neigt. Li₂O ist in Fachkreisen als Sinterhilfsstoff bekannt. Eine starke Sinterung ist aber bei der Herstellung von Wärmedämmschichten in der Regel eher nachteilig zu bewerten. Eine starke Sinterung führt in der Regel zur Erhöhung der Steifigkeit, die wiederum das Abplatzen der Schicht begünstigt. Bei der Dotierung mit Li zeigt sich im Vergleich zu einer Dotierung mit MgO zwar eine starke und länger andauernde Sinterung, jedoch wird die Steifigkeit nicht nachteilig beeinflusst. Die während der Sinterung auftretenden Spannungsrisse in der Schicht führen regelmäßig zu einer Erhöhung der Spannungstoleranz gegenüber den benachbart angeordneten Bauteilen.

Eine besonders vorteilhafte Ausbildung des Wärmedämmmaterials ergibt sich zunächst für eine Verbindung mit Lanthan als M1 Element und mit Aluminium als M2 Element. Bei diesen mit Li dotierten Lanthanhexaaluminaten findet sich eine besonders vorteilhafte Zusammensetzung in der Form von LaLiAl₁₁O_{18,5}. Daneben ist aber auch die Zusammensetzung LaLi_{0,5}Al_{11,5}O₁₉ als Wärmedämmschicht sehr gut geeignet.

Durch das Aufbringen des erfindungsgemäßen Wärmedämmmaterials können dünne und sehr effektive Wärmedämmschichten auf thermisch hochbelastete Bauteile aufgebracht werden, die besonders langzeitstabil sind und ein Abplatzen der Schicht bei wechselnden Temperaturbeanspruchungen regelmäßig verhindern.

Das Material ist prinzipiell auch zur Herstellung von massiven Bauteilen oder als Keramikschaum geeignet.

Als Aufbringungsverfahren sind insbesondere thermische Spritzverfahren und PVD/CVD Verfahren geeignet.

Dabei sind auch gradierte Schichtaufbauten prinzipiell möglich und auch geeignet.

### Spezieller Beschreibungsteil

Im Folgenden wird die Erfindung anhand von Ausführungsbeispielen und zwei Figuren näher erläutert, ohne dass der Gegenstand der Erfindung dadurch beschränkt wird.

Für Plasma-Spritzversuche an LaLiAl₁₁O_{18,5} wurde sprühgetrocknetes Hohlkugel-Pulver eingesetzt. Es lässt sich sowohl als Monolagen Schicht mit Bondcoat darunter verwenden, als auch in Mischungen mit YSZ.

Am sinnvollsten hat sich dabei der folgende Verbund gezeigt:
1. Bondcoat ( 100 - 150 µm) unterste Lage zur Metallschaufel hin.
2. YSZ (150 -200 µm)
3. LaLiAl₁₁O_{18,5} (150 µm) oberste Lage

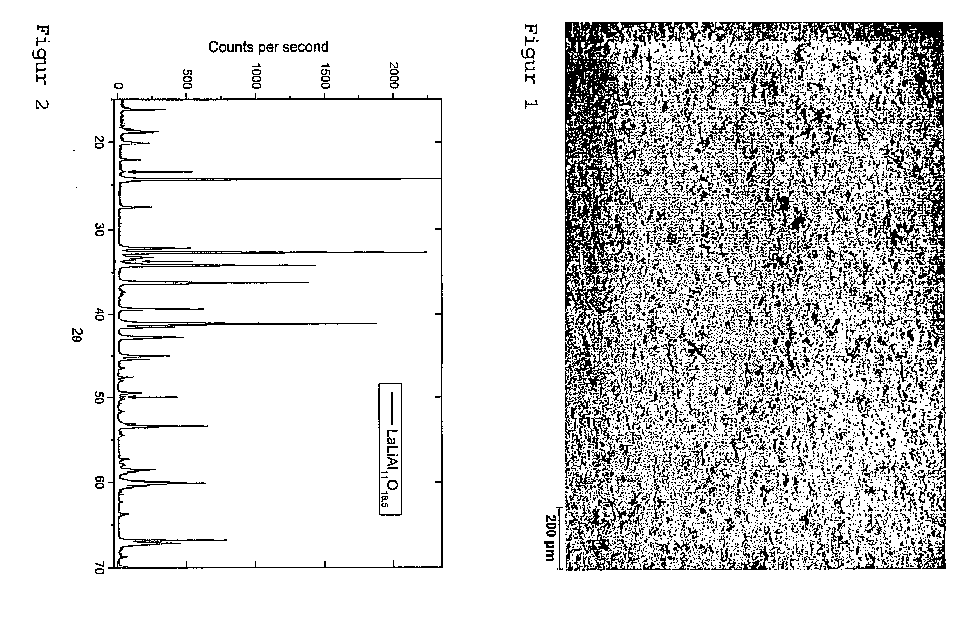

Eine derart durch Plasmaspritztechnik aufgebrachte Monolayer-Schicht ist in der Mikroskop-Aufnahme von LaLiAl₁₁O_{18,5} in Figur 1 zu sehen.

Die Präparation von LaLiAl₁₁O_{18,5} kann mittels nasschemischer Niederschlagsfällung oder auch als Festkörperreaktion der Oxide verlaufen. Für die Festkörperreaktion werden stöchiometrische Mengen an La₂O₃, α-Al₂O₃ und Li₂O bzw. Li₂CO₃, welches kostengünstiger ist, eingewogen, in Ethanol gemischt und fein vermahlen bis auf eine Korngröße von d₅₀ = 1,5 µm. Dieses Gemisch wird getrocknet und danach bei mindestens 1450°C zur Reaktion gebracht. Die Präparation von NdLiAl₁₁O_{18,5} und GdLiAl₁₁O_{18,5} verläuft analog obiger Beschreibung nur mit Nd₂O₃ bzw. Gd₂O₃. Das NdLiAl₁₁O_{18,5} hat eine schwach lila-blaue Farbe, während LaLiAl₁₁O_{18,5} und GdLiAl₁₁O_{18,5} als weißes Pulver vorliegen.

Die so erhaltenen Verbindungen kristallisieren überwiegend in der hexagonalen Magnetoplumbit-Struktur mit einer Gitterkonstante von
a, b = 556.33 ± 0.55 pm, c = 2193.07 ± 2,86 pm mit La,
a, b = 541,21 ± 0.85 pm, c = 2190.01 ± 3,46 pm mit Nd,
a, b = 514,51 ± 0.76 pm, c = 2193.07 ± 3,24 pm mit Gd,
α, β = 90° und γ = 120°

Figur 2 stellt das Röntgendiffraktogramm von LaLiAl₁₁O_{18,5}. dar. Die grauen Pfeile geben geringe Verunreinigungen an LaAlO₃ an.

Bei der Herstellung von LaLiAl₁₁O_{18,5} ergeben sich - ähnlich wie bei LaMgAl₁₁O₁₉ - häufig mehrere Phasen. Typische Verbindungen, die neben der Magnetoplumbit-Struktur auftreten können, sind α-Al₂O₃, LaAlO₃ und LiAl₅O₈ (ein Pseudospinell). Eigene Pulverprodukte enthalten ein oder zwei dieser Komponenten in sehr geringer Menge. Überwiegend ist das Auftreten von Nebenphasen ein Indiz für eine nicht optimale Homogenisierung und/oder zu geringe Ofentemperatur.

Die Nebenphasen selbst stören in sehr geringer Menge noch nicht. Insbesondere LaAlO₃ kann aber in größeren Mengen > 10 % die Lebensdauer der Wärmedämmschichten regelmäßig reduzieren und ist deshalb zu vermeiden. Geringe Mengen an Verunreinigungen von α-Al₂O₃ sind unkritisch.

Die Wärmeleitfähigkeit von LaLiAl₁₁O_{18,5} oberhalb von 1000°C ist mit 3,78 Wm⁻¹K⁻¹ im Vergleich zu YSZ (2,3 Wm⁻¹K⁻¹) deutlich höher. Dennoch ist dieses Material als Wärmedämmschicht in geeigneter Weise einsetzbar. Der hier genannte Wert wurde für das Bulkmaterial ermittelt. Bei plasmagespritzten Schichten tritt in der Regel nochmals eine deutliche Verringerung der Wärmeleitfähigkeit ein.

Der thermische Ausdehnungskoeffizient von LaLiAl₁₁O_{18,5} liegt zwischen 8,5 und 10,5*10⁻⁶ K⁻¹ und ist im Vergleich zu YSZ kleiner. Dies ist zunächst ungünstig für den Einsatz als Wärmedämmstoff. Jedoch überwiegt hierbei eindeutig der Vorteil der sich bildenden Segmentierungsrisse, die dazu führen, dass die thermische Ausdehnung an Bedeutung verliert.

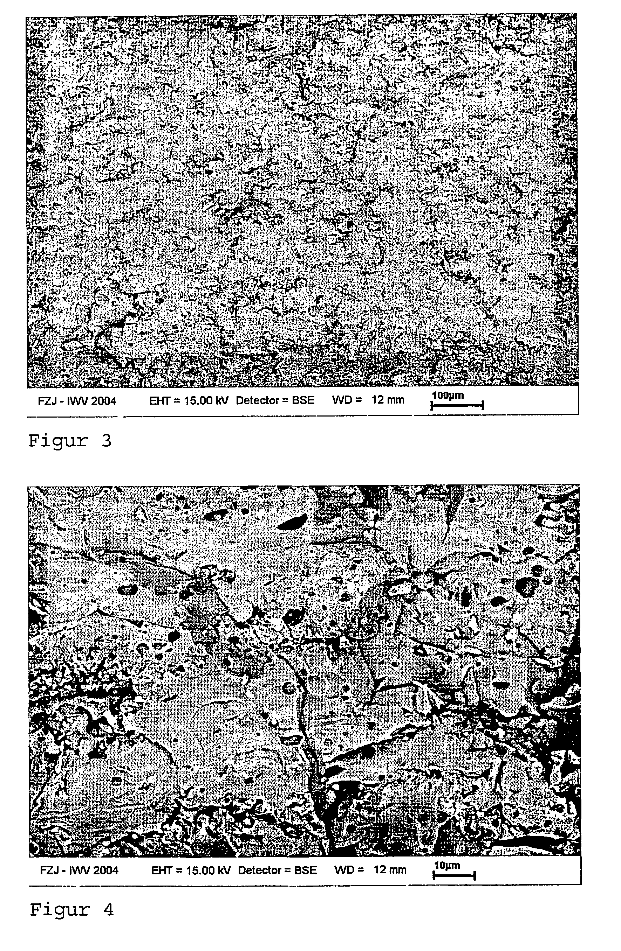

Die Figuren 3 und 4 zeigen SEM-(Scanning Electron Microscopy) Aufnahmen derselben Probe wie bei Figur 1 in verschiedenen Vergrößerungen. Die Mikrostruktur der Bruchkanten unterscheiden sich deutlich von beispielsweise Plasma-gespritzten Zirkonium Beschichtungen.

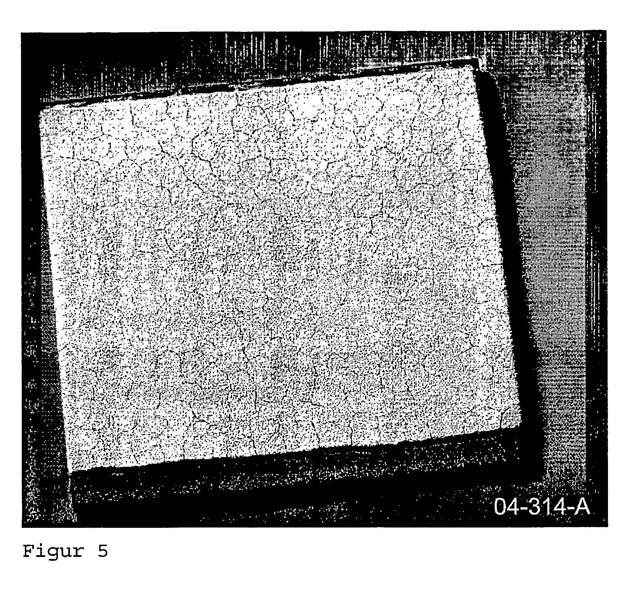

Die Figur 5 zeigt die nach einer 5-stündigen Wärmebehandlung (im Vakuum) bei 1200°C gebildeten typischen Segmentationsrisse in einer Plasma-gespritzten Schicht von LaLiAl₁₁O_{18,5}.

## Patentansprüche

1. Wärmedämmstoff umfassend eine erste Phase, die stöchiometrisch 0,1 bis 10 Mol-% M1₂O₃, 0,1 bis 10 Mol-% Li₂O sowie als Rest M2₂O₃ mit zufälligen Verunreinigungen enthält, wobei M1 aus den Elementen Lanthan, Neodym, Gadolinium oder einer Mischungen hiervon ausgewählt ist, und wobei M2 aus den Elementen Aluminium, Gallium, Eisen oder einer Mischung hiervon ausgewählt ist, und wobei die erste Phase in einer Magnetoplumbit-Struktur vorliegt.

2. Wärmedämmstoff nach Anspruch 1,
der wenigstens eine weitere Phase mit der Zusammensetzung M1M2O₃, LiM2₂O₃, LiM2₅O₉ oder Li₂O aufweist.

3. Wärmedämmstoff nach Anspruch 1 oder 2,
mit einer ersten Phase, die stöchiometrisch 1 bis 10 Mol-% M1₂O₃, 0,5 bis 10 Mol-% Li₂O und als Rest M2₂O₃ mit zufälligen Verunreinigungen aufweist.

4. Wärmedämmstoff nach Anspruch 1 bis 3,
mit einer ersten Phase, die stöchiometrisch 3 bis 8 Mol-% M1₂O₃, 0,5 bis 8 Mol-% Li₂O sowie als Rest M2₂O₃ mit zufälligen Verunreinigungen enthält.

5. Wärmedämmstoff nach Anspruch 1 bis 4,
bei dem die erste Phase La₂O₃ als M1₂O₃ aufweist.

6. Wärmedämmstoff nach Anspruch 1 bis 5,
bei dem die erste Phase 3 bis 8 Mol-% LagO₃, 0,5 bis 7,8 Mol-% Li₂O und als Rest Al₂O₃, Ga₂O₃ oder Fe₂O₃ aufweist.

7. Wärmedämmstoff nach Anspruch 1 bis 6, bei dem die erste Phase die Zusammensetzung LaLiAl₁₁O_{18,5} oder LaLi_{0,5}Al_{11,5}O₁₉ aufweist.

8. Wärmedämmstoff nach Anspruch 1 bis 7, bei dem die erste Phase mit einem Anteil von wenigstens 80 Gew.-% in dem Wärmedämmstoff vorliegt.

9. Wärmedämmstoff nach Anspruch 8, bei dem die erste Phase mit einem Anteil von wenigstens 90 Gew.-% in dem Wärmedämmstoff vorliegt.

10. Verwendung des Wärmedämmstoffs nach Anspruch 1 bis 9 in einer Wärmedämmschicht.

11. Verwendung nach Anspruch 10 in einer Wärmedämmschicht zusammen mit YSZ.

12. Verfahren zur Herstellung eines Wärmedämmstoffs nach einem der Ansprüche 1 bis 9, mit einer ersten Phase, die in einer Magnetoplumbit-Struktur vorliegt, **dadurch gekennzeichnet,**
- **dass** für die erste Phase stöchiometrische Mengen an M1₂O₃, Li₂O oder Li₂CO₃ sowie M2₂O₃ in einem Lösungsmittel gemischt und fein vermahlen werden, wobei M1 aus den Elementen Lanthan, Neodym, Gadolinium oder einer Mischungen hiervon ausgewählt ist, und wobei M2 aus den Elementen Aluminium, Gallium, Eisen oder einer Mischung hiervon ausgewählt ist,
- **dass** das Gemisch getrocknet und bei Temperaturen von wenigsten 1450°C zur Reaktion gebracht wird,
- wobei sich in einer Festkörperreaktion dann der Wärmedämmstoff mit wenigstens einer Phase in einer Magnetoplumbit-Struktur ausbildet.

## Claims

1. Heat insulation material comprising a first phase, which stoichiometrically contains 0.1 to 10 mol % of M1₂O₃ and 0.1 to 10 mol % of Li₂O as well as M2₂O₃ as residue with random impurities, in which M1 is selected from the elements lanthanium, neodymium, gadolinium or a mixture of these and in which M2 is selected from the elements aluminium, gallium, iron or a mixture of these and in which the first phase is in a magnetoplumbite structure.

2. Heat insulation material according to claim 1,
which has at least a further phase with the composition M1M2O₃, LiM2₂O₃, LiM2₅O₈ or Li₂O.

3. Heat insulation material according to claim 1 or 2
with a first phase, which stoichiometrically has 1 to 10 mol % of M1₂O₃, 0.5 to 10 mol % of Li₂O and M2₂O₃ as residue with random impurities.

4. Heat insulation material according to claim 1 to 3
with a first phase, which stoichiometrically contains 3 to 8 mol % of M1₂O₃ and 0.5 to 8 mol % of Li₂O as well as M2₂O₃ as residue with random impurities.

5. Heat insulation material according to claim 1 to 4,
in which the first phase has La₂O₃ as M1₂O₃.

6. Heat insulation material according to claim 1 to 5,
in which the first phase has 3 to 8 mol % of La₂O₃, 0.5 to 7.8 mol % of Li₂O and Al₂O₃, Ga₂O₃ or Fe₂O₃ as residue.

7. Heat insulation material according to claim 1 to 6, in which the first phase has the µcomposition LaLiAl₁₁O_{18.5} or LaLi_{0.5}Al_{11.5}O₁₉.

8. Heat insulation material according to claim 1 to 7, in which the first phase has a proportion of at least 80 weight % in the heat insulation material.

9. Heat insulation material according to claim 8, in which the first phase has a proportion of at least 90 weight % in the heat insulation material.

10. Use of the heat insulation material according to claim 1 to 9 in a heat insulation layer.

11. Use according to claim 10 in a heat insulation layer together with YSZ.

12. Method for producing a heat insulation material according to one of claims 1 to 9 with a first phase, which is in a magnetoplumbite structure, **characterised in that**
- for the first phase stoichiometric quantities of M1₂O₃, Li₂O or Li₂CO₃ as well as M2₂O₃ are finely crushed and mixed in a solvent, in which M1 is selected from the elements lanthanium, neodymium, gadolinium or a mixture of these and in which M2 is selected from the elements aluminium, gallium, iron or a mixture of these,
- the mixture is dried and reacted at temperatures of at least 1450°C,
- in which the heat insulation material is then formed in a solid reaction with at least one phase in a magnetoplumbite structure.

## Revendications

1. Matériau isolant thermique comprenant une première phase qui contient au niveau stoechiométrique, 0,1 à 10 % en mole de M1₂O₃, 0,1 à 10 % en mole de Li₂O et comme résidu, M2₂O₃ avec des impuretés éventuelles, M1 étant choisi parmi les éléments lanthane, néodyme, gadolinium ou un mélange de ceux-ci, et M2 étant choisi parmi les éléments aluminium, gallium, fer ou un mélange de ceux-ci et la première phase se présentant en une structure de magnétoplombite

2. Matériau isolant thermique selon la revendication 1,
qui présente au moins une autre phase de composition M1M2O₃, LiM2₂O₃, LiM2₅O₈ ou Li₂O.

3. Matériau isolant thermique selon la revendication 1 ou 2,
comportant une première phase qui présente au niveau stoechiométrique, 1 à 10 % en mole de M1₂O₃, 0,5 à 10 % en mole de Li₂O et comme résidu, M2₂O₃ avec des impuretés éventuelles.

4. Matériau isolant thermique selon les revendications 1 à 3,
comportant une première phase qui présente au niveau stoechiométrique, 3 à 8 % en mole de M1₂O₃, 0,5 à 8 % en mole de Li₂O et comme résidu, M2₂O₃ avec des impuretés éventuelles.

5. Matériau isolant thermique selon la revendication 1 à 4,
qui présente dans la première phase, La₂O₃ en tant que M1₂O₃.

6. Matériau isolant thermique selon la revendication 1 à 5,
dans lequel la première phase présente 3 à 8 % en mole de La₂O₃, 0,5 à 7,8% en mole de Li₂O et comme résidu, A1₂O₃, Ga₂O₃ ou Fe₂O₃.

7. Matériau isolant thermique selon la revendication 1 à 6, dans lequel la première phase présente la composition LaLiAl₁₁O_{λ8,5} ou LaLi_{0,9}Al_{11,5}O₁₉.

8. Matériau isolant thermique selon la revendication 1 à 7, dans lequel la première phase se présente avec une proportion d'au moins 80 % en poids dans le matériau isolant thermique.

9. Matériau isolant thermique selon la revendication 8, dans lequel la première phase se présente avec une proportion d'au moins 90 % en poids dans le matériau isolant thermique.

10. Utilisation du matériau isolant thermique selon la revendication 1 à 9 dans une couche isolante thermique.

11. Utilisation selon la revendication 10, dans une couche isolante thermique avec YSZ.

12. Procédé de production d'un matériau isolant thermique selon l'une des revendications 1 à 9, avec une première phase qui présente une structure de magnétoplombite, **caractérisé en ce que**
- pour la première phase, des quantités stoechiométriques de M1₂O₃, Li₂O ou de Li₂CO₃ et de M2₂O₃ sont mélangées dans un solvant et finement broyées, M1 étant choisi parmi les éléments lanthane, néodyme, gadolinium ou un mélange de ceux-ci et M2 étant choisi parmi les éléments aluminium, gallium, fer ou un mélange de ceux-ci,
- le mélange est séché et on le fait réagir à des températures d'au moins 1450° C,
- le matériau isolant thermique est formé dans une réaction de solides avec au moins une phase dans une structure de magnétoplombite.
